# FASCICULE DE BREVET EUROPEEN

(11) **EP 0 765 711 B1**
(45) Date de publication et mention de la délivrance du brevet: **05.01.2000**
(21) Numéro de dépôt: 96402041.6
(22) Date de dépôt: 26.09.1996
(51) Int. Cl.: B23P 15/04, B21D 26/02, B23K 20/18

(54) **Procédé de fabrication d'une aube creuse de turbomachine**
Verfahren zur Herstellung einer hohlen Turbinenschaufel
Method of fabricating a hollow turbine blade

(30) Priorité: 27.09.1995 FR 9511300
(43) Date de publication de la demande: 02.04.1997
(73) Titulaire: SOCIETE NATIONALE D'ETUDE ET DE CONSTRUCTION DE MOTEURS D'AVIATION, "S.N.E.C.M.A.", 75015 Paris (FR); DASSAULT AVIATION, F-75008 Paris (FR)
(72) Inventeur: Bichon, Mathieu Philippe Albert, 95120 Ermont (FR); Huon de Kermadec, Christophe, 78000 Versailles (FR); Coudray, Xavier Gérard André, 77300 Fontainebleau (FR); Lacuisse, Jean-François Georges Julien, 95100 Argenteuil (FR); Deblois, Alex Pierre, 86240 Fontaine le Comte (FR); Rolland, Bruno André Marie, 95420 Vaucresson (FR)

(56) Documents cités:
- EP-A- 0 500 458
- EP-A- 0 549 172
- EP-A- 0 700 738
- GB-A- 2 261 032
- GB-A- 2 269 555
- US-A- 4 882 823
- US-A- 5 269 058

## Description

La présente invention concerne un procédé de fabrication d'une aube creuse de turbomachine.

Les avantages découlant de l'utilisation d'aubes à grande corde pour les turbomachines sont apparus notamment dans le cas des aubes de rotor de soufflante des turboréacteurs à double flux. Ces aubes doivent répondre à des conditions sévères d'utilisation et posséder notamment des caractéristiques mécaniques suffisantes associées à des propriétés d'endurance aux vibrations et de résistance aux impacts de corps étrangers. L'objectif de vitesses suffisantes en bout d'aube a en outre amené à rechercher une réduction des masses. Ce but est notamment atteint par l'utilisation d'aubes creuses.

L'aube de soufflante a une géométrie spécifique liée à la faible dimension de moyeu qui conduit à avoir une aube très cambrée en pied et un profil très plat en sommet de pale pour un taux de compression sensiblement constant sur la hauteur. De plus, il faut élaborer une forme géométrique adéquate de transition entre l'attache de l'aube et la pale aérodynamique proprement dite. Cela conduit à une géométrie fortement tridimensionnelle sur l'arrière du profil en partie basse appelée "cuillère" avec un cambrage dans le sens du profil et une cambrure dans le sens radial.

Pour avoir une bonne tenue mécanique des aubes de soufflante creuses en alliage de titane, un soin particulier doit être apporté sur la conception de la géométrie interne et sa qualité de réalisation se traduisant par les spécifications suivantes :
- formation de rayon de raccordement au bord d'attaque et bord de fuite entre les deux peaux primaires intrados et extrados ;
- formation de rayon de raccordement entre le raidisseur et les peaux primaires intrados et extrados ;
- striction très faible dans les raidisseurs ;
- conservation des qualités mécaniques du métal de base lors de la réalisation de soudure diffusion, d'excellente qualité dans toutes les jonctions peaux/raidisseur ;
- obtention d'un état de surface des cavités internes après gonflage conforme aux exigences usuelles des pièces en titane ;
- optimisation de la gamme de fabrication afin de ne pas dégrader les caractéristiques mécaniques intrinsèques des aubes de soufflante en titane forgé.

En outre le procédé de fabrication doit permettre la fabrication de pièces ayant des paramètres géométriques évolutifs (variation d'épaisseur de peaux primaires du raidisseur, variation de l'angle de formage du raidisseur, variation de la largeur des zones soudées...).
La pièce fabriquée doit en effet être conforme aux exigences d'une géométrie optimisée ayant une bonne tenue à la fatigue vibratoire, une bonne tenue à l'ingestion et remplir toutes les conditions de conception pour la durée de vie recherchée sur moteur.

On connaît notamment un procédé de fabrication d'une aube creuse de turbomachine comportant les étapes suivantes (voir, par exemple EP-A-0 500 458) :
(a) à partir de la définition d'une aube à obtenir, étude en utilisant des moyens de Conception et Fabrication Assistés par Ordinateur / CFAO des pièces constitutives de l'aube ;
b) forgeage sur presse des pièces primaires ;
c) usinage des pièces primaires ;
d) dépôt de barrières de diffusion suivant un motif prédéfini;
e) assemblage des pièces primaires suivi du soudage-diffusion en pression isostatique ;
f) gonflage sous pression de gaz et formage superplastique ;
g) usinage final.

Le but de l'invention est d'apporter aux nombreux procédés connus de fabrication d'aubes creuses des amélioration ou des spécificités substantielles visant notamment à obtenir des aubes présentant des caractéristiques mécaniques dans les conditions d'utilisation, gràce à une géométrie adéquate, en particulier en ce qui concerne la réalisation de la cavité de l'aube.

Ces buts sont atteints par un procédé de fabrication d'une aube creuse de turbomachine, du type précité, caractérisé en ce que
- à l'étape (c), une réserve de matière dans des zones localisées de la face interne des peaux est aménagée et aux étapes (b) et (c), des éléments formant tourillon sont disposés à chaque extrémité des pièces primaires et au moins deux trous de locating sont aménagés sur chaque pièce,
- l'étape (d) est effectuée suivant le déroulé suivant :
   * (d1) application d'un masque de type organique sur au moins une face d'au moins l'une des pièces primaires ;
   * (d2) découpe du masque suivant un motif prédéfini représentant les limites des zones soudées et non soudées au moyen d'un outil spécifique sur machine à commande numérique, au cours de laquelle dans les zones correspondant aux raccordements du côté des bords d'attaque et de fuite de l'aube où se forme un rayon de cavité ainsi que dans les zones du rayon de raccordement entre les raidisseurs et les peaux, un réglage de la position de découpe du masque permet un décalage de la limite de soudure ;
   * (d3) pelage des zones non soudées ;
   * (d4) nettoyage des surfaces ;
   * (d5) dépôt d'un produit de revêtement formant une barrière de diffusion sur les surfaces précédemment préparées ;
   * (d6) pelage du masque restant ;
   * (d7) traitement de précuisson du produit d'anti-diffusion ;
   * (d8) nettoyage et contrôle des surfaces à souder ;
- à l'étape (e), l'étape d'assemblage des pièces primaires est effectuée en utilisant lesdits tourillons d'extrémités et des pions de positionnement latéraux placés dans lesdits trous de locating ;
- à l'étape (f), un cycle prédéterminé de mise en pression de formage est appliqué comportant,
   * (f1) avant démarrage du gonflage, un décollement des pièces primaires à froid est effectué ;
   * (f2) après la fermeture du moule dans lequel est placée la pièce sous forme de sandwich obtenue à l'issue de l'étape (e), un fluage de la matière prévue en surépaisseur autour de la cavité de l'aube est effectué avant le gonflage ;
   * (f3) après formage, l'aube est extraite du moule à la température de formage grâce à un moyen mécanique assurant une mise sous contrainte de l'aube.

Les dispositions de la présente invention permettent d'obtenir la géométrie interne assurant les propriétés recherchées de l'aube et notamment :
- une géométrie générale de la section principalement le nombre, la forme et la position des raidisseurs ainsi que la position et la largeur de la cavité ;
- une géométrie locale principalement aux limites de soudure départ cavité et liaison peau/raidisseurs. Par convention, nous ne différencierons pas le rayon de cavité du bord d'attaque et celui du bord de fuite qui sera dénommé rayon de cavité. De la même façon nous ne dissocierons pas les rayons de liaison peau/raidisseur quelle que soit leur position et nous les appellerons rayon de départ peau/raidisseur.

D'autres caractéristiques et avantages de l'invention seront mieux compris à la lecture de la description qui va suivre des modes de réalisation de l'invention, en référence aux dessins annexés sur lesquels :
- la figure 1 représente une vue de face d'une aube creuse de turbomachine obtenue par le procédé de fabrication conforme à l'invention ;
- la figure 2 représente une vue schématique en coupe par un plan transversal de l'aube représentée sur la figure 1 ;
- la figure 3 montre un détail de liaison entre deux éléments de l'aube représentée sur les figures 1 et 2 ;
- la figure 4 représente une vue partielle montrant les détails de l'aube représentée sur les figures 1 et 2 ;
- la figure 5 représente une vue schématique en perspective des pièces brutes utilisées dans le procédé de fabrication conforme à l'invention ;
- la figure 6 représente une vue schématique en perspective d'un élément constitutif de l'aube représentée sur les figures 1 et 2 au stade de l'usinage ;
- les figures 7 et 8 représentent des vues partielles en coupe des éléments de l'aube représentée sur les figures 1 et 2 montrant des surépaisseurs aménagées au stade de l'usinage;
- la figure 9 représente une vue en perspective d'un élément de l'aube représentée sur les figures 1 et 2 montrant la mise en place d'un masque ;
- la figure 10 représente selon une vue schématique en coupe l'élément représenté sur la figure 9 ;
- la figure 11 représente selon une vue schématique en coupe similaire à celle de la figure 10 l'élément représenté sur les figures 9 et 10 au stade de la découpe du masque ;
- la figure 12 représente selon une vue schématique en coupe similaire à celle des figures 10 et 11 l'élément représenté sur les figures 9 à 11 au stade du pelage du masque ;
- la figure 13 représente selon une vue schématique en coupe similaire à celles des figures 10 à 12 l'élément représenté sur les figures 9 à 12 selon une variante du stade de la découpe du masque ;
- la figure 14 représente selon une vue schématique en coupe similaire à celle des figures 10 à 13 l'élément de la figure 13 au stade du pelage du masque ;
- la figure 15 représente selon une vue schématique en coupe similaire à celle des figures 10 à 14 l'élément des figures 13 et 14 au stade de l'usinage chimique de rainures ;
- la figure 16 représente selon une vue schématique en coupe similaire à celle des figures 10 à 15 l'élément des figures 13 à 15 au stade du pelage du masque restant ;
- la figure 17 représente selon une vue schématique en coupe similaire à celle des figures 10 à 16 l'élément représenté sur la figure 9 à la suite d'un usinage chimique effectué en variante ;
- la figure 18 représente selon une vue schématique en coupe similaire à celle des figures 10 à 17 l'élément de la figure 17 à la suite de la réalisation de zones rainurées ;
- les figures 19 et 20 représentent selon des vues schématiques en coupe similaire à celles des figures 10 à 18 respectivement l'élément de la figure 17 et l'élément de la figure 18 au stade du dépôt d'une barrière de diffusion ;
- les figures 21 et 22 représentent selon des vues schématiques en coupe similaires à celles des figures 10 à 20 respectivement l'élément des figures 17 et 19 et l'élément des figures 18 et 20 au stade de pelage du masque restant ;
- la figure 23 représente selon une vue en perspective l'assemblage des pièces primaires constitutives de l'aube ;
- la figure 24 représente selon une vue en perspective l'achèvement de l'assemblage schématisé sur la figure 23 ;
- les figures 25 et 26 montrent selon des vues partielles schématiques en coupe deux détails de réalisation de méplats dans la liaison entre éléments de l'aube ;
- la figure 27 représente selon une vue schématique en perspective les deux parties constitutives du moule utilisé dans l'étape de formage superplastique de l'aube selon le procédé conforme à l'invention ;
- la figure 28 représente selon une vue similaire à celle de la figure 7 un détail montrant un défaut de fabrication.

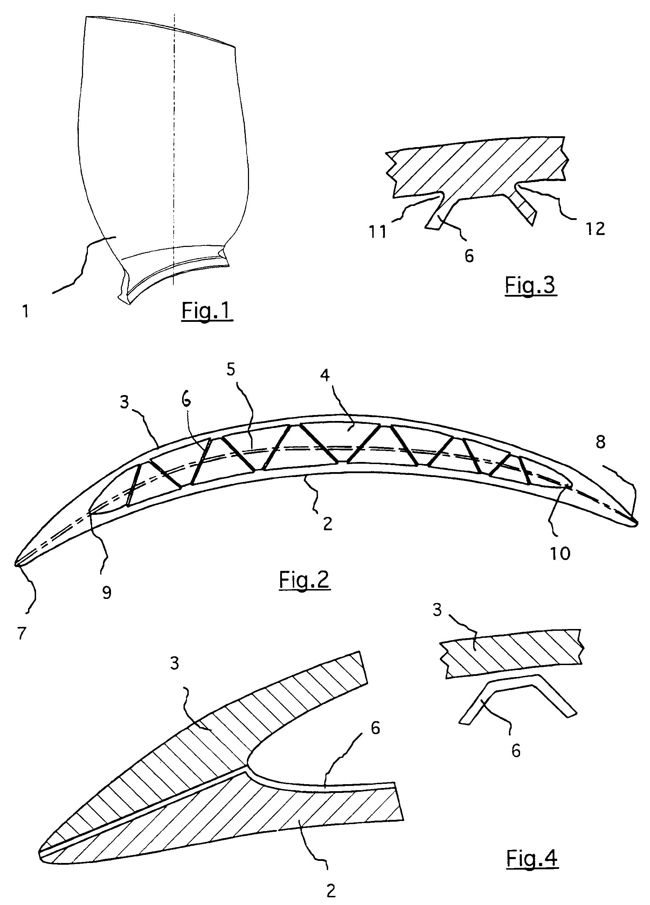

Une aube 1 creuse de turbomachine, notamment une aube de soufflante à grande corde destinée par exemple à un turboréacteur à double flux est schématiquement représentée sur les figures 1 et 2. L'aube 1 est constituée d'une peau d'intrados 2, d'une peau d'extrados 3, ces peaux étant écartées pour former une cavité interne 4 dans laqueile est disposé un élément 5 formant de multiples raidisseurs 6 qui assurent la liaison entre les peaux 2 et 3. Dans l'aube 1 obtenue selon le procédé de fabrication dont les améliorations font l'objet de l'invention, lesdites peaux 2 et 3 sont soudées sur leurs bords pour former un bord d'attaque 7 et un bord de fuite 8 et la cavité 4 de l'aube 1 présente un rayon 9 du côté du bord d'attaque et un rayon 10 du côté du bord de fuite 8. De même, l'élément 5 comporte des zones soudées, les unes sur la peau d'intrados 2 et les autres sur la peau d'extrados 3 et ainsi les liaisons entre les raidisseurs 6 et les peaux 2 et 3 forment des rayons tels que 11 et 12, comme schématisé sur la figure 3.

Le première étape (a) du procédé, conforme à l'invention, de fabrication d'une aube creuse telle que 1 de soufflante de turbomachine comporte, à partir du dessin de la pièce finie une étude faisant appel à des moyens connus en soi de Conception et Fabrication Assistés par Ordinateur ou CFAO. Cette étude permet de simuler un dégonflage de la peau d'extrados 3 et la construction de l'élément 5 ou tôle centrale de manière à faire reposer ces deux éléments sur la tôle intrados ou à les placer à une distance connue. Le logiciel de simulation utilisé permet de préciser le mouvement relatif des tôles lors du formage. Pour obtenir la géométrie ainsi définie, chaque élément constitutif de l'aube, respectivement 2, 3 et 5, appelé pièce primaire reçoit des surépaisseurs compatibles avec le processus de forgeage prévu, comme schématisé sur la figure 4.

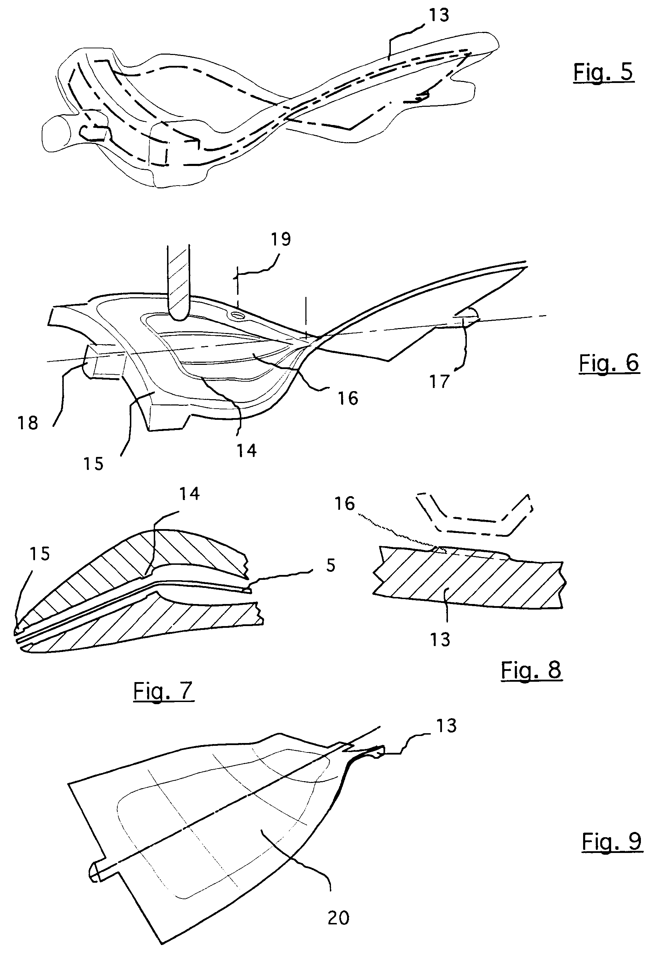

La figure 5 montre les pièces brutes 13 à l'origine de ces éléments constitutifs 2, 3 et 5 de l'aube avec leur surépaisseur d'usinage et qui sont obtenues par forceage et matricage sur presse. Ce processus amélioré permet d'obtenir une géométrie et un produit d'une grande précision avec des caractéristiques mécaniques améliorées, suivant l'étape (b) du procédé.

A l'étape (c), les pièces brutes 13 sont usinées, comme représentées sur la figure 6. La finition de la surface interne des pièces primaires est réalisée par tout procédé d'usinage connu en soi. A ce stade et de manière avantageuse, une surépaisseur de matière peut être aménagée sur les peaux primaires sur tout le pourtour de la zone de ces peaux destinée à former la cavité d'aube. Cette partie 14 en surépaisseur constitue alors une zone de fluage destinée à être ultérieurement déformée plastiquement. De la même manière, une partie 15 en surépaisseur sur le pourtour de pièce est destinée à assurer lors de l'assemblage un espacement entre les tôles. La figure 7 montre un détail de ces surépaisseurs 14 et 15.

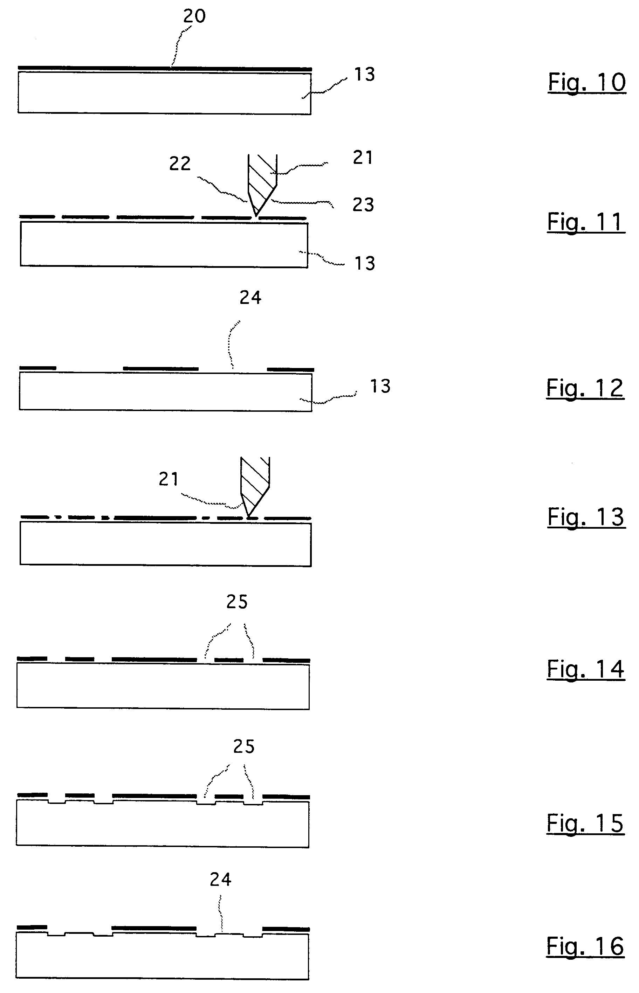

De manière avantageuse, des surépaisseurs localisées de type méplats 16 peuvent également être aménagées à l'étape (c) sur la face interne des peaux primaires dans les zones d'emplacement des soudures de liaison entre peau et raidisseur, comme schématisé sur la figure 8. Les peaux primaires telles que 13 comportent à chaque extrémité des tourillons 17 et 18 qui seront utilisés lors des étapes suivantes du procédé. En outre, au moins deux trous 19 de locating sont usinés sur les pièces primaires. De manière avantageuse, l'opération d'usinage peut être effectuée sur des outillages à dépression de manière à assurer la précision recherchée du positionnement des zones de cavité l'une par rapport à l'autre. Ces précautions sont essentielles pour obtenir les rayons de cavité adéquats. A l'étape d, un dépôt de barrières de diffusion est effectué suivant un motif prédéfini. De façon plus détaillée, cette opération est décomposée de la manière suivante :
- (d1) application d'un masque 20 de type organique sur au moins une face d'au moins une des pièces primaires 13, telle que représentée sur les figures 9 et 10,
- (d2) découpe du masque 20 suivant un motif prédéfini représentant les limites des zones soudées et non soudées, comme le schématise la figure 11. L'utilisation d'un outil spécifique sur machine à commande numérique permet un réglage précis de la position de découpe du masque.

La découpe peut ainsi être réalisée à l'aide d'une molette telle que 21 présentant des flancs dissymétriques 22 et 23, sur une machine à commande numérique. La forme déterminée de la molette 21 et un réglage judicieux de la pression d'outil assurent une découpe de haute précision.
Cette opération de découpe peut également être réalisée au moyen d'un scalpel asservi par un système électro-pneumatique de manière à assurer une découpe nette sans créer de dommage sur la pièce primaire 13.
En fonction des applications particulières, un usinage au laser à faible puissance peut être utilisé pour une découpe nette sans créer de dommage sur la pièce primaire 13.

La sous-étape (d3) comporte le pelage des zones 24 non soudées, comme schématisé sur la figure 12.

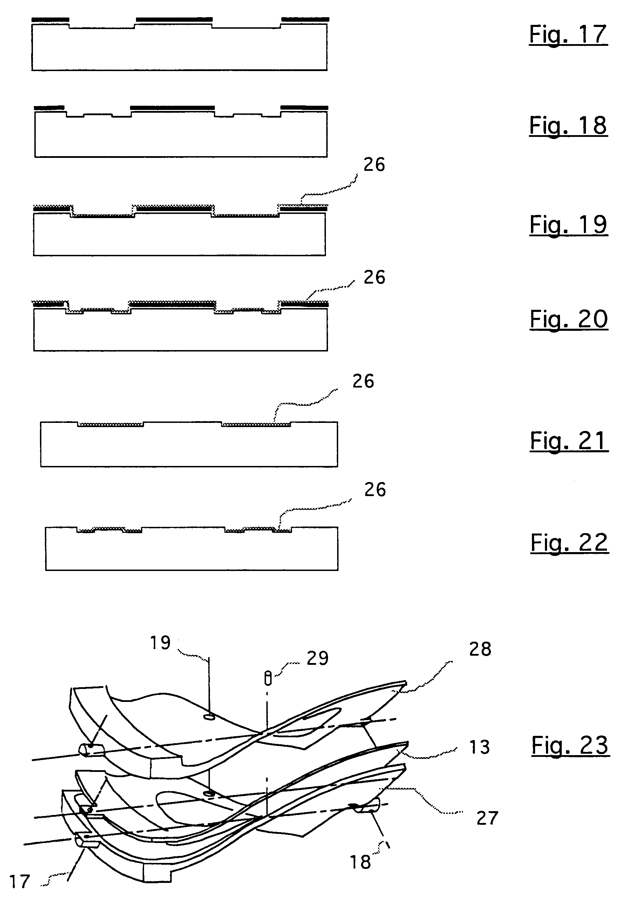

Une première variante prévoit des sous-étapes complémentaires:
- (d2') découpe du masque 20, en créant des zones rainurées 25 suivant un motif prédéfini représentant des parallèles aux zones soudées, comme le schématise la figure 13,
- (d3') pelage des zones 25 à rainurer en bordure des zones à souder entre peaux et raidisseurs, comme schématisé sur la figure 14,
- (d3'') usinage chimique de rainures dans lesdites zones découvertes en (d3'), comme schématisé sur la figure 15, - (d3''') pelage du masque restant afin de découvrir les zones 24 comme le schématise la figure 16.

Une autre variante prévoit un usinage chimique, par exemple d'une profondeur maximale de 0,75 mm, afin de créer une limite franche en bordure de découpe, comme schématisé sur la figure 17 montrant les zones 24 ou sur la figure 18 avec les zones rainurées 25.
Le procédé se poursuit par les sous-étapes suivantes :
- (d4) nettoyage des surfaces
- (d5) dépôt d'un produit de revêtement 26 formant une barrière de diffusion sur les surfaces précédemment préparées, comme indiqué sur les figures 19 et 20 avec ou sans rainures. Ledit produit est déposé par pulvérisation en couches successives d'une épaisseur pouvant atteindre 40 µm. Après chaque application, on réalise un séchage.
- (d6) pelage du masque restant, la pièce étant maintenue dans une position évitant toute retombée de produit antidiffusion sur les zones à souder. Le résultat obtenu est schématisé sur les figures 21 et 22, avec ou sans rainures.
- (d7) traitement de précuisson du produit d'anti-diffusion. La température est choisie entre 250°C et 350°C durant un temps prédéterminé pour assurer un taux de dégradation de la majeure partie du liant contenu dans le produit antidiffusion compatible avec la suite des opérations et de manière à éviter toute oxydation des pièces, cette dégradation s'effectuant en l'absence d'air ;
- (d8) les zones à souder sont nettoyées, leur propreté est soigneusement contrôlée, par exemple sous lumière ultraviolette.

A l'étape suivante (e), les pièces primaires 13, 27, 28 constitutives de l'aube, telles que représentées sur la figure 23 sont assemblées en utilisant les tourillons 17 et 18 et en plaçant des pions 29 de positionnement latéraux dans les trous 19 précédemment ménagés sur lesdites pièces primaires. L'assemblage effectué permet d'obtenir un parfait alignement des différentes pièces et des zones en vis à vis destinées à la formation des cavités internes de l'aube et ces dispositions permettront notamment l'obtention de la valeur adéquate du rayon de cavité.

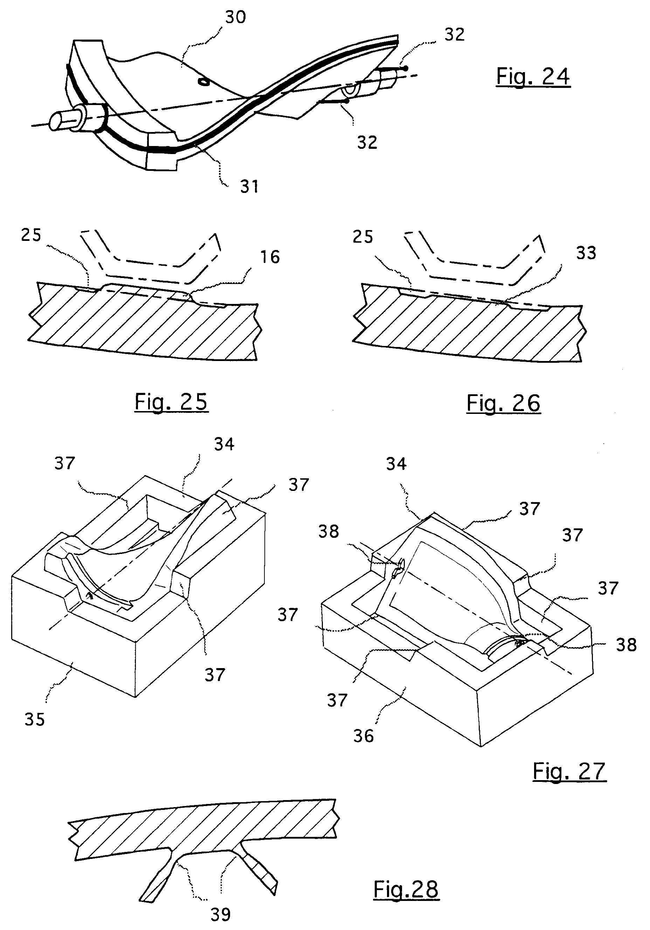

La figure 24 schématise l'achèvement de cet assemblage. Le contour du sandwich 30 obtenu est fermé, par exemple au moyen d'une soudure 31 à l'arc TIG, par faisceau d'électrons ou au laser. A chaque extrémité on soude des tubes 30 et au moyen de ces tubes 32, le vide est réalisé uniformément à l'intérieur du sandwich 30 puis est maintenu par scellement de ces tubes 32. La présence de la surépaisseur 15 en périphérie des peaux intrados 28 et extrados 27 permet de ménager un espace constant entre les pièces constitutives de l'aube, lors de l'assemblage.

En variante, à la suite de l'assemblage du sandwich 30, il est possible de réaliser la cuisson du produit de diffusion mis en place à l'étape précédente (d).

Après assemblage, le sandwich 30 est soudé par diffusion dans une enceinte de compression isostatique, de manière à assurer un contact intime des pièces 13, 27 et 28 constitutives de l'aube.

Au cours de cette opération, les mouvements induits lors de la mise sous pression accompagnant la mise en contact des surfaces internes peuvent entraîner par frottement le déplacement et/ou la détérioration de la limite du produit anti diffusion. Les détails de réalisation représentés sur les figures 25 et 26 montrent dans un cas la présence de méplats positifs 16 et de rainures latérales 25 et dans l'autre cas de méplats négatifs 33 et de rainures latérales 25 sur les pièces primaires dans les zones destinées à constituer les liaisons entre raidisseurs et peaux comme représenté sur le détail de pièce de la figure 3. La présence des rainures 25 protège cette limite de produit antidiffusion sur les pièces constitutives de l'aube en la plaçant au; dessous du niveau du plan de soudure. La présence d'un espace constant à l'assemblage entre les pièces constitutives de l'aube grâce à la surépaisseur 15, comme précédemment décrit, en référence à la figure 6, assure lors de la soudure-diffusion une fonction de piège à impureté. Les défauts en découlant éventuellement sont alors localisés dans des zones destinées à être chutées.

A l'étape suivante (f), est effectué un formage des pièces constitutives de l'aube 1 dans des conditions superplastiques en appliquant dans la cavité interne 4 une pression de gonflage de manière à obtenir, comme schématisé sur la figure 2, le profil recherché sur les surfaces aérodynamiques de pale d'aube côté intrados 2 et côté extrados 3 et la mise en place des raidisseurs 6 issus de la pièce primaire centrale 13. Dans ce but, le sandwich 30 est mis en place dans un moule 34 schématiquement représenté sur la figure 27. Le moule 34 est en deux parties 35 et 36 et ses caractéristiques permettent d'assurer un positionnement relatif précis des deux parties 35 et 36, suivant les six degrés de liberté. Le moule 34 comporte notamment des butées anti-rotation 37 dont la position ainsi que les moyens de fermeture du moule déterminés permettent d'assurer un blocage des parties 35 et 36 en rotation horizontale et en translation, dès le début du cycle de formage. Les V de centrage 38 de la partie inférieure 35, au droit des tourillons 17 et 18, aux extrémités de pièce, assurent la position adéquate de celle-ci dans le moule 34. Grâce à ce positionnement rigoureux de l'ébauche d'aube dans le moule 34 on évite tout déport de l'aube, notamment un déplacement latéral qui aurait pour effet de venir écraser les rayons de cavité 9 et 10. Ces caractéristiques de positionnement du moule et de l'aube concourent ainsi à l'obtention des dimensions et formes des rayons de départ de cavité d'aube recherchés pour l'aube finie.
Avant l'opération de formage proprement dite, une sous-étape (f1) est effectuée avant démarrage du gonflage, comportant un décollement des pièces primaires à froid qui est nécessité par l'état de compactage du produit antidiffusion. Un cycle prédéterminé de mise en pression de formage est ensuite appliqué comportant notamment la mise en pression mécanique dès le démarrage du gonflage, de manière à assurer une absence de défauts sur la pièce obtenue. Un asservissement est notamment établi entre la pression de serrage du moule et la pression de gonflage. Une sous-étape (f2) intervient après la fermeture du moule 34 au cours de laquelle on réalise un fluage de la surépaisseur 14 localisée autour de la zone de formation de la cavité d'aube et précédemment mentionnée. Un enchaînement piloté des phases successives, fluage puis gonflage permet simultanément de générer la géométrie interne de l'aube et d'éviter des défauts de peau au droit des départs de cavité. Durant le formage, le cycle défini pour l'application de la pression gazeuse interne peut notamment respecter une vitesse de déformation contrôlée, de manière à assurer l'obtention des rayons de cavité, des rayons dans les zones de liaison entre peaux et raidisseurs, de l'état de surface de rayon requis ainsi que de l'absence de striction du raidisseur. La figure 28 montre ainsi un détail de défaut de striction 39 sur un raidisseur qui est évité par le procédé conforme à l'invention. La maîtrise du taux de déformation obtenue grâce aux caractéristiques de positionnement du moule et à l'application du cycle de formage permet d'assurer la valeur recherchée des rayons 9,10,11 et 12.
A la sous-étape suivante (f3), après formage, l'aube 1 est extraite du moule 34 par un moyen mécanique, incluant une mise sous contrainte qui maintient la géométrie de la pièce lors de cette opération qui est réalisée en maintenant la température de formage.

L'étape suivante (g) comporte enfin l'usinage final et les opérations de finition de la pièce, de manière connue en soi. Les modalités particulières de réalisation du procédé conforme à l'invention de fabrication d'une aube 1 creuse de turbomachine qui viennent d'être décrites assurent l'obtention des résultats recherchés et notamment la qualité technique de l'aube 1. On rappellera brièvement ces principaux résultats précédemment détaillés :
- obtention de la valeur des rayons 9 et 10 de départ de cavité recherchés et de la valeur du rayon de départ de soudure dans la zone de liaison entre les peaux 2 et 3 et les raidisseurs 6,
- positionnement adéquat de la ligne de soudure dans les zones mentionnées ci-dessus, au rayon de cavité et au rayon entre peaux et raidisseurs,
- qualité métallurgique du métal de base obtenue dans les zones mentionnées ci-dessus,
- état de surface adéquat dans le rayon 9 ou 10 de départ de cavité de l'aube,
- rectitude et netteté des départs de soudure entre peaux et raidisseurs,
- rectitude et absence de striction des raidisseurs 6,
- qualité de la géométrie extérieure de l'aube 1, notamment concernant la forme du profil, le vrillage, le cambrage et le désaxage.

## Revendications

1. Procédé de fabrication d'une aube creuse de turbomachine, notamment une aube de rotor de soufflante à grande corde, comportant les étapes suivantes :
- a) à partir de la définition d'une aube (1) à obtenir, étude en utilisant des moyens de Conception et Fabrication Assistés par Ordinateur /CFAO des pièces (2,3,5) constitutives de l'aube ;
- (b) forgeage sur presse des pièces primaires (13) ;
- (c) usinage des pièces primaires (13) comprenant une peau d'intrados, une peau d'extrados et au moins une pièce centrale ;
- (d) dépôt de barrières de diffusion suivant un motif prédéfini ;
- (e) assemblage des pièces primaires suivi du soudage-diffusion en pression isostatique ;
- (f) gonflage sous pression de gaz et formage superplastique de manière à obtenir la mise en forme des peaux d'intrados et d'extrados de l'aube séparées par une cavité centrale et reliées par des raidisseurs soudés obtenus à partir de ladite pièce centrale ;
- (g) usinage final ;
caractérisé en ce que,
- à l'étape (c), une réserve de matière dans des zones localisées (14,15) de la face interne des peaux est aménagée et aux étapes (b) et (c), des éléments formant tourillon (17,18) sont disposés à chaque extrémité des pièces primaires et au moins deux trous de locating (19) sont aménagés sur chaque pièce,
- l'étape (d) est effectuée suivant le le déroulé suivant :
* (d1) application d'un masque (20) de type organique sur au moins une face d'au moins l'une des pièces primaires ;
* (d2) découpe du masque (20) suivant un motif prédéfini représentant les limites des zones soudées et non soudées au moyen d'un outil spécifique sur machine à commande numérique, un réglage de la position de découpe du masque permettant un contrôle de la position des soudures dans les zones correspondant aux raccordements du côté des bords d'attaque et de fuite de l'aube où se forme un rayon de cavité ainsi que dans les zones du rayon de raccordement entre les raidisseurs et les peaux ;
* (d3) pelage des zones non soudées ;
* (d4) nettoyage des surfaces ;
* (d5) dépôt d'un produit de revêtement formant une barrière de diffusion sur les surfaces précédemment préparées ;
* (d6) pelage du masque restant ;
* (d7) traitement de précuisson du produit d'anti-diffusion ;
* (d8) nettoyage et contrôle des surfaces à souder ;
- à l'étape (e), l'étape d'assemblage des pièces primaires est effectuée en utilisant lesdits tourillons (17,18) d'extrémité et des pions (29) de positionnement latéraux placés dans lesdits trous (19) de locating ;
- à l'étape (f), un cycle prédéterminé de mise en pression de formage est appliqué comportant,
* (f1) avant démarrage du gonflage, un décollement des pièces primaires à froid est effectué ;
* (f2) après la fermeture du moule dans lequel est placée la pièce en forme de sandwich obtenue à l'issue de l'étape (e), un fluage de la matière (14) prévue en surépaisseur autour de la cavité de l'aube est effectué avant le gonflage ;
* (f3) après formage, l'aube est extraite du moule à la température de formage grâce à un moyen mécanique assurant une mise sous contrainte de l'aube.

2. Procédé de fabrication d'une aube creuse de turbomachine selon la revendication 1 dans lequel à l'étape (d2) l'outil spécifique utilisé est une molette (21) à flancs dissymétriques (22, 23) de manière que la forme déterminée de la molette et le réglage de la pression d'outil assurent une découpe de haute précision.

3. Procédé de fabrication d'une aube creuse de turbomachine selon la revendication 1 dans lequel à l'étape (d2) l'outil spécifique est un scalpel asservi par un système électro-pneumatique de manière à assurer une découpe nette sans créer de dommage sur la pièce primaire.

4. Procédé de fabrication d'une aube creuse de turbomachine selon la revendication 1 dans lequel à l'étape (d2), la découpe du masque est effectuée au moyen d'un usinage laser à faible puissance assurant une découpe nette sans créer de dommage sur la pièce primaire.

5. Procédé de fabrication d'une aube creuse de turbomachine selon l'une quelconque des revendications 1 à 4 dans lequel l'étape (d3) est décomposée en sous-étapes :
- (d3') pelage de zones à rainurer (25) ;
- (d3'') usinage chimique de rainures en bordure des zones à souder ;
- (d3''') second pelage des zones non soudées.

6. Procédé de fabrication d'une aube creuse de turbomachine selon l'une quelconque des revendications 1 à 5 dans lequel l'étape (d2) est précédée des sous-étapes suivantes :
- (d1.1) pelage des zones à souder ;
- (d1.2) usinage chimique des zones découvertes ;
- (d1.3) seconde application d'un masque sur les zones à souder.

7. Procédé de fabrication d'une aube creuse de turbomachine selon l'une quelconque des revendications 1 à 6 dans lequel à l'étape (c) une surépaisseur (14) de matière est aménagée sur tout le pourtour de la zone des peaux primaires destinée à former la cavité d'aube, cette partie en surépaisseur constituant une zone de fluage déformée plastiquement à l'étape (f).

8. Procédé de fabrication d'une aube creuse de turbomachine selon l'une quelconque des revendications 1 à 7 dans lequel à l'étape (c) des surépaisseurs localisées de type méplats (16) sont aménagées sur la face interne des peaux primaires dans les zones d'emplacement des soudures de liaison entre peau et raidisseur.

9. Procédé de fabrication d'une aube creuse de turbomachine selon l'une quelconque des revendications 1 à 8 dans lequel à l'étape (e), après assemblage des pièces primaires formant un sandwich (30), le contour du sandwich (30) est fermé en réalisant une étanchéité et des tubes (32) sont soudés en extrémité.

10. Procédé de fabrication d'une aube creuse de turbomachine selon la revendication 9 dans lequel la fermeture (31) du sandwich (30) est obtenue par soudage TIG ou à faisceau d'énergie.

11. Procédé de fabrication d'une aube creuse de turbomachine selon l'une quelconque des revendications 1 à 10 dans lequel à la suite de l'assemblage du sandwich (30), une cuisson du produit formant les barrières de diffusion est effectuée.

## Claims

1. Method of manufacturing a hollow turbine machine blade, particularly a wide-chord fan rotor blade, including the following stages:
- (a) on the basis of the definition of a blade (1) to be obtained, study, using Computer Aided Design and Manufacture/CADCAM of the pieces (2, 3, 5) constituting the blade;
- (b) forging of the primary pieces (13) on a press;
- (c) machining of the primary pieces (13) comprising a pressure face skin, a suction face skin and at least one central piece;
- (d) deposition of diffusion barriers according to a predefined pattern;
- (e) assembly of the primary pieces followed by isostatic-pressure diffusion welding;
- (f) inflation under gas pressure and superplastic forming so as to shape the pressure face and suction face skins of the blade, which are separated by a central cavity and linked by welded stiffeners obtained from the said central piece;
- (g) final machining;
characterized in that,
- at stage (c), spare material is left in localized regions (14, 15) of the inner face of the skins, and, at stages (b) and (c), elements forming a trunnion (17, 18) are arranged at each end of the primary pieces and at least two locating holes (19) are formed on each piece,
- stage (d) is carried out according to the following process:
* (d1) application of an organic-type mask (20) onto at least one face of at least one of the primary pieces;
* (d2) cutting out the mask (20) according to a predefined pattern representing the limits of the welded and unwelded regions by means of a special-purpose tool on a numerically controlled machine, setting of the position for cutting out the mask allowing control of the position of the welds in the regions corresponding to the connections on the leading and trailing edge sides of the blade where a cavity radius is formed, as well as the regions of the radius of connection between the stiffeners and the skins;
* (d3) peeling of the unwelded regions;
* (d4) cleaning of the surfaces;
* (d5) deposition of a coating product forming a diffusion barrier on the previously prepared surfaces;
* (d6) peeling of the remaining mask;
* (d7) prefiring treatment of the anti-diffusion product;
* (d8) cleaning and checking of the surfaces to be welded;
- at stage (e), the stage of assembling the primary pieces is carried out using the said end trunnions (17, 18) and lateral positioning pins (29) placed in said locating holes (19);
- at stage (f), a predetermined cycle for applying forming pressure is applied, including,
* (f1) before starting the inflation, cold-debonding of the primary pieces is carried out;
* (f2) after closing the mould in which is placed the piece, in sandwich form, obtained on completion of stage (e), the material (14) provided as an overthickness around the cavity of the blade is made to flow before the inflation;
* (f3) after forming, the blade is extracted from the mould at the forming temperature by virtue of a mechanical means placing the blade under stress.

2. Method of manufacturing a hollow turbine machine blade according to Claim 1, in which, at stage (d2), the special-purpose tool used is a cutting disc (21) with asymmetric flanks (22, 23), so that the defined shape of the cutting disc and the setting of the tool pressure provide a high cutting precision.

3. Method of manufacturing a hollow turbine machine blade according to Claim 1, in which, at stage (d2) the special-purpose tool is a scalpel servocontrolled by an electropneumatic system so as to provide a clean cut without causing damage to the primary piece.

4. Method of manufacturing a hollow turbine machine blade according to Claim 1, in which, at stage (d2), cutting out of the mask is carried out by means of low-power laser machining providing a clean cut without causing damage to the primary piece.

5. Method of manufacturing a hollow turbine machine blade according to any one of Claims 1 to 4, in which stage (d3) is broken down into substages:
- (d3')peeling of regions to be grooved (25);
- (d3'')chemical machining of grooves at the border of the regions to be welded;
- (d3''') second peeling of the unwelded regions.

6. Method of manufacturing a hollow turbine machine blade according to any one of Claims 1 to 5, in which stage (d2) is preceded by the following substages:
- (d1.1) peeling of the regions to be welded;
- (d1.2) chemical machining of the uncovered regions;
- (d1.3) second application of a mask on the regions to be welded.

7. Method of manufacturing a hollow turbine machine blade according to any one of Claims 1 to 6, in which, at stage (c) an overthickness (14) of material is formed over the entire periphery of that region of the primary skins intended to form the blade cavity, this part with overthickness constituting a flow region plastically deformed at stage (f).

8. Method of manufacturing a hollow turbine machine blade according to any one of Claims 1 to 7, in which, at stage (c) localized overthicknesses in the form of flat surfaces (16) are formed on the inner face of the primary skins in the regions where the welds for linking between skin and stiffener are located.

9. Method of manufacturing a hollow turbine machine blade according to any one of Claims 1 to 8, in which, at stage (e), after assembling the primary pieces forming a sandwich (30), the contour of the sandwich (30) is closed by forming a seal, and tubes (32) are welded to the end.

10. Method of manufacturing a hollow turbine machine blade according to Claim 9, in which the closure (31) of the sandwich (30) is achieved by TIG or energy-beam welding.

11. The method of manufacturing a hollow turbine machine blade according to any one of Claims 1 to 10, in which, following the assembling of the sandwich (30), firing of the product forming the diffusion barriers is carried out.

## Patentansprüche

1. Verfahren zur Herstellung einer hohlen Turbinenschaufel, insbesondere einer Rotorschaufel eines Gebläses mit großer Weste, bestehend aus den folgenden Schritten:
a) ausgehend von der Definition einer herzustellenden Schaufel (1) erfolgt die Entwicklung unter Verwendung von Mitteln zum rechnerunterstützten Entwerfen (CAD) und zur rechnergestützten Fabrikation (CAM) der Bestandteile (2, 3, 5) der Schaufel,
b) Schmieden der Rohlinge (13) auf der Presse,
c) Bearbeiten der Rohlinge (13), die eine Druckseitenhaut, eine Saugseithaut und mindestens ein Mittelstück aufweisen,
d) Aufbringen von Diffusionswänden nach einem vorbestimmten Muster,
e) Zusammensetzen der Rohlinge, gefolgt vom Diffusionsschweißen unter isostatischem Druck,
f) Aufblähen unter Gasdruck und superplastisches Formen dergestalt, daß die Formung der Druckseitenhaut und der Saugseitenhaut der Schaufel, die durch einen zentralen Hohlraum voneinander getrennt und durch angeschweißte, aus dem Mittelstück hergestellte Versteifungsrippen miteinander verbunden werden, erreicht wird,
g) Endbearbeitung,
**dadurch gekennzeichnet, daß**
- in Verfahrensschritt (c) eine Materialreserve in den bestimmten Bereichen (14, 15) der Innenseite der Druckseiten- und Saugseitenhaut vorgesehen wird und in den Verfahrensschritten (b) und (c) an jedem Ende der Rohlinge Elemente als Lagerzapfen (17, 18) angeordnet werden und an jedem Rohling mindestens zwei Fixierlöcher (19) hergestellt werden,
- der Verfahrensschritt (d) mit folgendem Ablaufausgeführt wird:
(d1) Anbringen einer Maske (20) organischen Typs auf mindestens einer Seite von mindestens einem der Rohlinge,
(d2) Ausschneiden der Maske (20) nach einem vorbestimmten Muster, das die Grenzen der geschweißten und der nicht geschweißten Bereiche darstellt, aufeiner NC-Maschine, wobei durch ein Einstellen der Ausschneideposition der Maske die Position der Schweißungen in den Bereichen, die den Verbindungen an der Vorder- und der Hinterkante der Schaufel entsprechen, wo sich ein Hohlraumradius bildet, sowie in den Bereichen des Versteifungsrippensitzradius an der Druckseiten- und Saugseitenhaut gesteuert werden Kann,
(d3) Enthüllen der nicht geschweißten Bereiche,
(d4) Reinigung der Oberflächen,
(d5) Aufbringen eines Beschichtungsprodukts zur Bildung einer Diffusionswand auf den zuvor vorbereiteten Flächen,
(d6) Enthüllen der restlichen Maske,
(d7) Vorhärtungsbehandlung des Diffusionsschutzprodukts,
(d8) Reinigung und Überprüfung der zu schweißenden Oberflächen,
- in Verfahrensschritt (e) der Vorgang des Zusammenfügens der Rohlinge unter Benützung der genannten End-Lagerzapfen (17, 18) und seitlicher Positionierstifte (29), die in die genannten Fixierlöcher (19) eingeführt werden, ausgeführt wird,
- in Verfahrensschritt (f) ein vorbestimmter Zyklus des Formpressens durchgeführt wird, bei dem:
(f1) vor Beginn des Blähens ein Keltablösen der Rohlinge ausgeführt wird,
(f2) nach dem Schließen der Form, in die das am Ende des Verfahrensschritts (e) erhaltene Werkstück in Sandwich-Form eingebracht wurde, vor dem Blähen ein Fließen des in Überdicke vorgesehenen Materials (14) um den Hohlraum der Schaufel herum ausgeführt wird,
(f3) die Schaufel nach dem Formen mit Hilfe eines mechanischen Mittels, das die Schaufel unter Spannung setzt, bei Formungstemperatur aus der Form entnommen wird.

2. Verfahren zur Herstellung einer hohlen Turbinenschaufel nach Anspruch 1, wobei in Verfahrensschritt (d2) das verwendete Spezialwerkzeug ein Rundschneidemesser (21) mit asymmetrischen Flanken (22, 23) ist, so daß durch die bestimmte Form des Rundschneidermessers und durch das Einstellen des Drucks des Werkzeugs ein Hochpräzisions- Abschnitt gewährleistet wird.

3. Verfahren zur Herstellung einer hohlen Turbinenschaufel nach Anspruch 1, wobei in Verfahrensschritt (d2) das verwendete Spezialwerkzeug ein mit einem elektropneumatischen System gesteuertes Skalpell ist, so daß ein sauberer Abschnitt gewährleistet ist, ohne den Rohling zu beschädigen.

4. Verfahren zur Herstellung einer hohlen Turbinenschaufel nach Anspruch 1, wobei in Verfahrensschritt (d2) der Abschnitt der Maske mittels einer Laserbearbeitung mit niedriger Leistung erfolgt, die einen sauberen Abschnitt gewährleistet, ohne den Rohling zu beschädigen.

5. Verfahren zur Herstellung einer hohlen Turbinenschaufel nach einem der Ansprüche 1 bis 4, wobei der Verfahrensschritt (d3) in Unterschritte unterteilt ist:
- (d3') Enthüllen von Bereichen, die gerillt werden sollen (25),
- (d3'') chemische Bearbeitung von Rillen am Rand der zu schweißenden Bereiche,
- (d3''') zweites Enthüllen der nicht geschweißten Bereiche.

6. Verfahren zur Herstellung einer hohlen Turbinenschaufel nach einem der Ansprüche 1 bis 5, wobei dem Verfahrensschritt (d2) folgende Unterschritte vorausgehen:
- (d1.1) Enthüllen der zu schweißenden Bereiche,
- (d1.2) chemische Bearbeitung der freigelegten Bereiche,
- (d1.3) zweites Aufbringen einer Maske auf die zu schweißenden Bereiche.

7. Verfahren zur Herstellung einer hohlen Turbinenschaufel nach einem der Ansprüche 1 bis 6, wobei in dem Verfahrensschritt (c) über den gesamten Außenumfang des Bereichs der Druckseiten- und Saugseitenhautrohlinge, der den Hohlraum der Schaufel bilden soll, eine Material-Überdicke (14) hergestellt wird, wobei dieser Abschnitt in Überdicke einen Fließbereich bildet, der in dem Verfahrensschritt (f) plastisch verformt wird.

8. Verfahren zur Herstellung einer hohlen Turbinenschaufel nach einem der Ansprüche 1 bis 7, wobei im Verfahrensschritt (c) auf der Innenseite der Druckseiten- und Saugseitenhautrohlinge in den Bereichen, in denen die Verbindungsschweißungen zwischen Haut und Versteifungsrippe plaziert werden, stellenweise abgeflachte Überdicken (16) hergestellt werden.

9. Verfahren zur Herstellung einer hohlen Turbinenschaufel nach einem der Ansprüche 1 bis 8, wobei im Verfahrensschritt (e) nach dem Zusammensetzen der Rohlinge in Sandwich-Form (30) die Außenlinie des Sandwich (30) unter Herstellung von Dichtigkeit verschlossen wird, und am Ende Rohre (32) angeschweißt werden.

10. Verfahren zur Herstellung einer hohlen Turbinenschaufel nach Anspruch 9, wobei der Verschluß (31) des Sandwich (30) durch TIG-Schweißen oder Energiestrahlschweißen hergestellt wird.

11. Verfahren zur Herstellung einer hohlen Turbinenschaufel nach einem der Ansprüche 1 bis 10, wobei nach dem Zusammensetzen des Sandwich (30) ein Härten des Produkts durchgeführt wird, das die Diffusionswände bildet.
